(19) Europäisches Patentamt / European Patent Office / Office européen des brevets

(11) **EP 3 807 598 B1**

(12) **FASCICULE DE BREVET EUROPEEN**

(45) Date de publication et mention de la délivrance du brevet:
**13.09.2023 Bulletin 2023/37**

(21) Numéro de dépôt: **19745193.3**

(22) Date de dépôt: **11.06.2019**

(51) Classification Internationale des Brevets (IPC):
***G01D 5/14*** *(2006.01)*

(52) Classification Coopérative des Brevets (CPC):
**G01D 5/145**

(86) Numéro de dépôt international:
**PCT/FR2019/051408**

(87) Numéro de publication internationale:
**WO 2019/239057 (19.12.2019 Gazette 2019/51)**

(54) **METHODE DE DETERMINATION D'UNE POSITION ANGULAIRE RELATIVE ENTRE DEUX PIECES**

VERFAHREN ZUR BESTIMMUNG EINER RELATIVEN WINKELLAGE ZWISCHEN ZWEI TEILEN

METHOD FOR DETERMINING A RELATIVE ANGULAR POSITION BETWEEN TWO PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2018 FR 1855274**

(43) Date de publication de la demande:
**21.04.2021 Bulletin 2021/16**

(73) Titulaire: **Electricfil Automotive**
**01700 Beynost (FR)**

(72) Inventeur: **JERANCE, Nikola**
**69004 LYON (FR)**

(74) Mandataire: **Cabinet Beau de Loménie**
**158, rue de l'Université**
**75340 Paris Cedex 07 (FR)**

(56) Documents cités:
**EP-A1- 3 735 569        DE-A1-102006 051 720**
**DE-A1-102015 114 608    US-A1- 2015 022 192**
**US-A1- 2015 142 376     US-B2- 8 587 294**

**Description**

L'invention concerne méthode de détermination d'une position angulaire relative d'une première pièce par rapport à une seconde pièce autour d'un axe de rotation, qui sera avantageusement mis en oeuvre à l'aide d'un système capteur de position magnétique.

Les avantages techniques des systèmes capteurs magnétiques sont bien connus. Ils peuvent être produits à des coûts relativement bas, ils ne sont pas soumis à une usure mécanique significative, et ils sont quasiment insensibles à l'humidité et à la saleté (poussière, huile, etc.) non magnétique. Grâce à ces avantages, les systèmes capteurs magnétiques sont souvent utilisés dans les applications pour l'automobile.

Un système capteur magnétique de position angulaire comporte au moins un corps aimanté à aimantation permanente, et au moins une cellule de mesure de champ magnétique, le système capteur étant prévu pour mesurer la position relative de la cellule de mesure par rapport au corps aimanté, autour de l'axe de rotation.

Dans une application pratique, le mécanisme à surveiller comporte une première pièce et une seconde pièce qui sont mobiles en rotation l'une par rapport à l'autre. Le corps aimanté est rendu solidaire de la première pièce, ou intégrée à celle-ci, tandis que la ou les cellule(s) de mesure est rendue solidaire de la seconde pièce du mécanisme, et le système capteur permet de déterminer la position relative des deux pièces du mécanisme.

Dans certains cas, on souhaite pouvoir mesurer la position relative sur une course angulaire strictement inférieure à 360 degrés d'angle. Cependant, dans d'autres cas, on souhaite pouvoir déterminer la position relative sur 360 degrés d'angle autour de l'axe de rotation, voire sur plus de 360°.

Typiquement, dans une application dans le domaine automobile, de tels systèmes capteurs sont utilisés pour déterminer la position angulaire d'un volant, lequel se déplace par rapport à une pièce fixe du véhicule sur plus de 360 degrés. Dans ce cas, un système capteur est généralement disposé au niveau de la colonne de direction. Selon une autre application, de tels systèmes capteurs peuvent être utilisés pour déterminer la position angulaire d'un organe de sortie d'un actionneur, par exemple pour un actionneur de frein de parc. L'invention est destinée à la résolution des problèmes liés à la mise en oeuvre pratique des systèmes capteurs, qui sont souvent destinés à être intégrés dans un espace contraint, avec un volume disponible limité, et souvent en présence des pièces ferromagnétiques à proximité du système capteur, ce qui peut réduire la précision de la détermination de la position angulaire.

On connait du document US-8.587.294 une méthode dans laquelle un système de capteurs est mis en oeuvre en utilisant une combinaison linéaire de la composante radiale et de la composante tangentielle du champ magnétique crée par un corps aimanté. Dans cette méthode, une première pièce est équipée avec un corps aimanté, en forme de bague cylindrique de révolution autour de l'axe de rotation, et présentant une aimantation diamétrale. Une seconde pièce est équipée avec une première cellule de mesure en un premier point de mesure et avec une deuxième cellule de mesure en un deuxième point de mesure. Chaque cellule de mesure délivre aux moins deux signaux électriques représentatifs respectivement d'une composante primaire et d'une composante secondaire de l'orientation du champ magnétique créé par le corps aimanté au point de mesure de la cellule considérée, respectivement selon un axe de mesure primaire et un axe de mesure secondaire qui sont orthogonaux entre eux et orthogonaux à l'axe de rotation. Le premier point de mesure de la première cellule de mesure et le deuxième point de mesure de la deuxième cellule sont à égale distance de l'axe de rotation. Dans ce document, les deux points de mesures sont agencés dans des positions écartées de 90° autour de l'axe de rotation. De la sorte, les deux cellules mesurent, en chacun des deux points de mesure, respectivement une composante purement radiale et une composante purement tangentielle du champ créé par la bague aimantée au point de mesure considéré. Cette solution nécessite deux cellules de mesure placées à 90° magnétiques l'une par rapport à l'autre. Cela signifie que le champ magnétique est mesuré en deux points séparés d'une distance importante, ce qui augmente la sensibilité du capteur aux tolérances de montage et aux perturbations magnétiques De plus, cela entraîne l'utilisation d'un système capteur relativement encombrant.

Le document US-2015/0142376 présente divers dispositifs qui ont tous pour point commun de disposer des cellules de mesure sur l'axe de rotation du système aimanté, en regard d'un face transversale d'extrémité du système aimanté. Du fait de cette nécessité de disposer les cellules de mesures sur l'axe de rotation, le système capteur correspondant de D1 doit impérativement être agencé à l'extrémité axiale de l'arbre du mécanisme dont on veut mesurer la position en rotation. A la figure 13, ce document présente un dispositif dans lequel l'aimant présente un aimant cylindrique de révolution qui est divisée en deux parties. La direction d'aimantation du matériau constitutif du corps aimanté est inverse entre les deux parties, c'est-à-dire que le vecteur d'aimantation présente toujours des directions inverses entre les deux parties.

L'invention vise à définir une méthode de détermination de la position angulaire relative entre deux pièces qui permette l'utilisation d'un système capteur plus compact.

Dans ce but, l'invention propose une méthode de détermination d'une position angulaire relative d'une première pièce par rapport à une seconde pièce autour d'un axe de rotation, la méthode comprenant :

- l'équipement de la première pièce avec un corps aimanté, en forme de secteur angulaire cylindrique de révolution autour de l'axe de rotation, et présentant une aimantation diamétrale ;

- l'équipement de la seconde pièce avec une première cellule de mesure en un premier point de mesure et avec une deuxième cellule de mesure en un deuxième point de mesure, chaque cellule de mesure délivrant aux moins deux signaux électriques représentatifs respectivement d'une composante primaire et d'une composante secondaire du champ magnétique créé par le corps aimanté au point de mesure de la cellule considérée, respectivement selon un axe de mesure primaire (x) et un axe de mesure secondaire qui sont orthogonaux entre eux et orthogonaux à l'axe de rotation ;
- l'agencement du premier point de mesure de la première cellule de mesure et du deuxième point de mesure de la deuxième cellule à égale distance de l'axe de rotation et dans des positions écartées d'un angle fixe non nul et strictement inférieur à 90 degrés d'angle autour de l'axe de rotation ;

caractérisée en ce que :

- la première et la deuxième cellule de mesure sont agencées sur la seconde pièce de telle sorte que les axes de mesure primaires de la première et de la deuxième cellule de mesure sont parallèles entre eux, et que les axes de mesure secondaires de la première et de la deuxième cellule de mesure sont parallèles entre eux ;
- la méthode détermine une valeur représentative de la position angulaire relative entre les deux pièces en déterminant un angle brut dont la tangente est fonction d'un rapport entre d'une part la différence des composantes secondaires et d'autre part la différence des composantes primaires, mesurées par les deux cellules pour une position angulaire relative donnée,
- les points de mesure de la première et de la deuxième cellule sont agencés dans un même plan perpendiculaire à l'axe de rotation, ce plan étant en coïncidence avec le corps aimanté selon la direction axiale de l'axe de rotation.

Selon d'autres caractéristiques de l'invention, prises individuellement ou en combinaison :

- La première et la deuxième cellule de mesure peuvent être agencées sur la seconde pièce de telle sorte que les axes de mesure primaires de la première et de la deuxième cellule de mesure, ou les axes de mesure secondaires de la première et de la deuxième cellule de mesure, sont orientés selon la direction d'une bissectrice de l'écart angulaire entre les deux points de mesure, mesuré autour de l'axe de rotation dans un plan perpendiculaire à l'axe de rotation.
- La méthode peut calculer la position angulaire relative en retranchant, à l'angle brut calculé, un écart angulaire fixe.
- Le corps aimanté peut présenter la forme d'un tronçon d'un secteur tubulaire cylindrique de révolution autour de l'axe de rotation.
- Le corps aimanté peut présenter la forme d'un tronçon d'un secteur angulaire de disque cylindrique de révolution autour de l'axe de rotation.
- Le corps aimanté peut présenter la forme d'un secteur angulaire à 360° autour de l'axe de rotation.
- La première et la deuxième cellule de mesure peuvent être agencées sur la seconde pièce dans des positions écartées d'un angle fixe non nul inférieur à 30 degrés d'angle, de préférence inférieur ou égal à 20 degrés d'angle autour de l'axe de rotation.

Diverses autres caractéristiques ressortent de la description faite ci-dessous en référence aux dessins annexés qui montrent, à titre d'exemples non limitatifs, des formes de réalisation de l'objet de l'invention.

- La **Figure 1** est une vue schématique en perspective illustrant un mode de réalisation d'un système capteur permettant de mettre en oeuvre l'invention ;
- La **Figure 2** est une vue schématique, en coupe par un plan perpendiculaire à l'axe de rotation, du système de la Figure 1 ;
- La **Figure 3** est une vue similaire à celle de la Fig. 1, illustrant un second mode de réalisation d'un système capteur permettant de mettre en oeuvre l'invention ;
- La **Figure 4** illustre des étapes d'une méthode selon l'invention ;
- La **Figure 5** illustre des signaux différentiels obtenus par simulation.

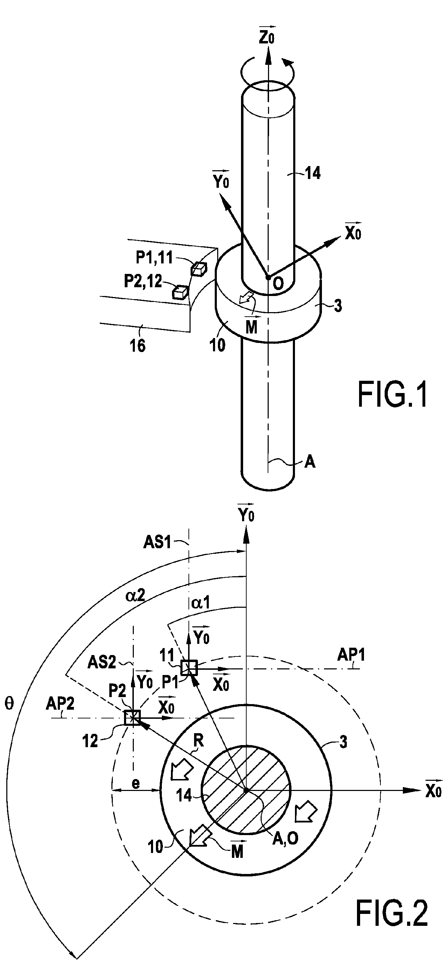

On a illustré sur les **Figs. 1** et **2** un mode de réalisation d'un système capteur **1** de position magnétique permettant la mise en oeuvre d'une méthode de détermination de la position angulaire relative selon l'invention.

Pour ce premier mode de réalisation, le système capteur **1** est conçu pour déterminer la position relative de deux pièces **14, 16** qui sont susceptibles de se déplacer relativement l'une à l'autre d'une part selon un mouvement de rotation d'axe **A**. Dans l'exemple il n'y a pas d'autre axe de déplacement relatif. Cependant, on pourrait prévoir que les deux pièces **14, 16** soient susceptibles de se déplacer relativement l'une à l'autre selon un deuxième axe de déplacement relatif, qui pourrait par exemple correspondre à une translation parallèlement à l'axe de rotation **A.** Dans l'exemple, on considère que les deux pièces **14, 16** n'ont pas de mouvement relatif selon les directions radiales par rapport à l'axe de rotation **A.** Le système capteur **1** peut ainsi par exemple être utilisé pour détecter la position d'un volant fixé sur une colonne de direction, le système de capteur étant avantageusement agencé au niveau d'un arbre rotatif de la colonne de direction.

Le système capteur **1** comporte d'une part un corps aimanté **10** à aimantation $\vec{M}$ permanente, et au moins deux cellules de mesure de champ magnétique **11, 12.** Dans une application pratique, le corps aimanté **10** est destiné à être fixé à une première pièce **14** d'un mécanisme, par exemple un arbre rotatif d'une colonne de direction ou un arbre de sortie d'un actionneur, qui est mobile par rapport à une seconde pièce **16** du mécanisme, par exemple une pièce fixe de la structure du véhicule ou d'une pièce de support du système capteur **1.**

Le capteur **1** est prévu pour déterminer la position angulaire relative du corps aimanté **10** par rapport aux cellules de mesure **11, 12,** autour de l'axe de rotation **A.** Le mouvement relatif entre le corps aimanté **10** et les cellules de mesure **11, 12,** qui est une simple rotation dans l'exemple considéré, peut donc être décrit dans un repère orthogonal $(O, \vec{Xo}, \vec{Yo})$ dans un plan perpendiculaire à l'axe de rotation **A,** le point d'origine **0** étant un point de l'axe **A,** de préférence le centre du corps aimanté **10,** et les directions des vecteurs de base $\vec{Xo}$ et $\vec{Yo}$ étant arbitraires mais orthogonales entre elles. Dans ce repère, on peut par exemple considérer que les directions des vecteurs de base $\vec{Xo}$ et $\vec{Yo}$ sont liées à la seconde pièce **16** qui porte les cellules de mesure **11, 12.** Dans ce repère, la première pièce **14** est mobile et la seconde pièce **16** est fixe, mais cela est arbitraire dans la mesure où l'on considère uniquement un mouvement relatif entre les deux pièces **14, 16.**

Le corps aimanté **10** possède une géométrie en forme de secteur angulaire cylindrique de révolution autour de l'axe de rotation **A.** Le secteur angulaire pourrait présenter une étendue inférieure à 360 degrés d'angle autour de l'axe de rotation **A.** Il pourrait notamment présenter alors une géométrie en « tuile », c'est-à-dire présentant la forme d'un tronçon d'un secteur d'un tube cylindrique de révolution autour de l'axe **A,** délimité par deux bords latéraux parallèles à l'axe de rotation **A.** Toutefois, le secteur angulaire présente, dans le mode de réalisation illustré, une étendue égale à 360 degrés d'angle autour de l'axe rotation **A,** de sorte que, dans l'exemple, le corps aimanté **10** présente une géométrie en « bague », ayant la forme d'un tronçon d'un tube cylindrique de révolution autour de l'axe de rotation **A.**

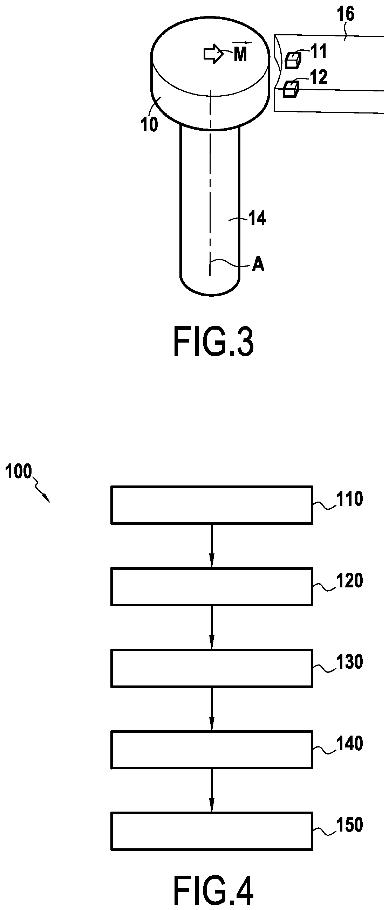

Dans l'exemple de la **Fig. 1,** le corps aimanté **10** est agencé sur un arbre **14,** à distance des extrémités longitudinales de l'arbre, avec donc des tronçons de l'arbre **14** de chaque côté du corps aimanté **10.** Cependant, comme illustré à la **Fig. 3,** on peut très bien prévoir une configuration dans laquelle le corps aimanté est agencé en bout d'arbre, au niveau d'une extrémité longitudinale de celui-ci. Dans ce cas, le corps aimanté peut, entre autres s'il doit couvrir un secteur angulaire de 360°, présenter la géométrie d'un disque.

Bien entendu, le corps aimanté **10** présente une épaisseur selon une direction radiale par rapport à l'axe de rotation **A.** Dans le cas d'un corps aimanté de type disque, comme illustré à la **Fig. 3,** l'épaisseur correspond à un rayon du disque.

Le corps aimanté **10** présente une surface enveloppe avant **3** qui est, dans les exemples illustrés, la surface cylindrique de révolution externe, autour de l'axe de rotation **A,** du corps aimanté. Typiquement, notamment pour une application de mesure de la position angulaire d'un arbre de sortie d'un actionneur, le corps aimanté peut présenter un diamètre externe, correspondant au diamètre de la surface enveloppe avant 3, qui peut être compris dans la gamme allant de 10 millimètres à 40 millimètres. Pour d'autres applications, un diamètre supérieur peut être mis en oeuvre.

Lors d'un déplacement relatif entre les cellules de mesure **11, 12** d'une part et le corps aimanté **10** d'autre part, les cellules de mesure **11, 12** se déplacent relativement en regard de la surface enveloppe avant **3** du corps aimanté **10.** Cela implique que les cellules de mesure **11, 12** sont décalées par rapport à la surface enveloppe avant **3** du corps aimanté **10** selon une direction radiale par rapport à l'axe de rotation **A.** Cela implique aussi que les cellules de mesure **11, 12** sont en correspondance avec la surface enveloppe avant **3** du corps aimanté **10** selon la direction de l'axe de rotation **A.** De préférence, les cellules de mesure **11, 12** sont, comme dans les exemples de la **Fig. 1** et de la **Fig. 2,** en correspondance avec la mi-hauteur de la surface enveloppe avant **3** du corps aimanté **10** selon la direction de l'axe de rotation **A.** Dans l'exemple, lors du déplacement relatif entre le corps aimanté **10** et les cellules de mesure **11, 12,** il est conservé une distance d'entrefer « **e** » constante entre les cellules de mesure **11, 12** et la surface enveloppe avant **3** du corps aimanté **10** selon la direction radiale par rapport à l'axe de rotation. Cependant, il n'est pas exclu que la distance d'entrefer soit variable sur au moins une partie de l'étendue du champ opérationnel.

La détermination de position angulaire relative réalisée à l'aide du système capteur **1** est réalisée pour toute position angulaire relative, entre les cellules de mesure **11, 12** et le corps aimanté **10,** variant entre deux positions angulaires relatives extrêmes distinctes autour de l'axe de rotation **A,** de préférence pour toutes positions angulaires relatives à 360 degrés d'angle. Dans certains cas, on prévoira que le corps aimanté **10** présente une étendue suffisante selon la direction de l'axe de rotation **A** pour que la détermination de la position angulaire relative soit aussi pour des positions axiales variant entre deux positions relatives extrêmes distinctes selon la direction de l'axe **A.**

En tout point magnétisé du corps aimanté **10,** la direction d'aimantation $\vec{M}$ du matériau constitutif du corps aimanté **10** est constante sur toute l'extension du corps aimanté, c'est-à-dire qu'en tout point magnétisé du corps aimanté, le vecteur d'aimantation $\vec{M}$ présente toujours la même direction absolue, au sens de toujours la même direction orientée, dans la mesure de faisabilité technique industrielle habituelle. Dans les exemples, la direction d'aimantation $\vec{M}$ est de type appelé généralement diamétral, et elle est contenue dans un plan perpendiculaire à l'axe de rotation **A**. De préférence, la direction d'aimantation $\vec{M}$ constante correspond à la direction d'un diamètre issu perpendiculairement de l'axe de rotation **A,** qui est un axe de révolution du corps aimanté, de préférence la direction d'un diamètre contenu dans un plan diamétral de symétrie du corps aimanté **10.**

Dans les exemples, l'aimantation du corps aimanté présente une valeur d'aimantation **M**, ou intensité d'aimantation, constante en tout point magnétisé du corps aimanté **10,** tout du moins dans la mesure de faisabilité technique industrielle habituelle.

Selon l'invention, les points de mesure **P1** et **P2** de la première et de la deuxième cellule **11, 12** sont agencés dans un même plan perpendiculaire à l'axe de rotation **A**. Selon l'invention, ce plan présente de plus la particularité d'être en coïncidence avec le corps aimanté **10** selon la direction axiale de l'axe de rotation **A**. Avantageusement on pourra faire en sorte que ce plan perpendiculaire à l'axe de rotation **A** dans lequel sont situés les points de mesure **P1** et **P2** soit un plan de symétrie du corps aimanté **10.**

Dans le système capteur **1,** chacune des deux cellules de mesure **11, 12** détermine, en un point de mesure correspondant **P1, P2,** des valeurs représentatives de l'orientation du champ magnétique **B** créé par le corps aimanté **10** en ces points de mesure **P1, P2.** Chaque cellule de mesure **11, 12** délivre aux moins deux signaux électriques, par exemple numériques et/ou analogiques, représentatifs respectivement d'une composantes primaire et d'une composante secondaire du vecteur représentatif du champ magnétique **B** induit par le corps aimanté **10** au point de mesure de la cellule considérée, respectivement selon un axe de mesure primaire **AP1, AP2** et selon un axe de mesure secondaire **AS1, AS2** qui sont orthogonaux entre eux et orthogonaux à l'axe de rotation **A**.

Le premier point de mesure **P1** de la première cellule de mesure **11** et le deuxième point de mesure **P2** de la deuxième cellule de mesure sont agencés à égale distance **R** de l'axe de rotation **A**. Avantageusement, ils peuvent être, comme illustré, agencés dans des positions écartées d'un angle fixe, non nul, et strictement inférieur à 90 degrés d'angle autour de l'axe de rotation **A**.

Par ailleurs, la première et la deuxième cellule de mesure **11, 12** sont agencées sur la seconde pièce **16** de telle sorte que les axes de mesure primaires **AP1** de la première et **AP2** de la deuxième cellule de mesure **11, 12** sont parallèles entre eux, et que les axes de mesure secondaires **AS1** de la première et **AS2** de la deuxième cellule de mesure sont parallèles entre eux. Autrement dit, les deux cellules de mesure **11, 12,** notamment leurs éléments de mesure, sont agencées parallèlement l'une à l'autre. Cela implique notamment qu'au moins une des deux cellules présente des axes de mesure primaire **AP1, AP2** et secondaire **AS1, AS2** qui, au point de mesure **P1, P2** correspondant de cette cellule, ne sont pas alignés avec les directions radiales et tangentielles en ce point par rapport au mouvement relatif de rotation d'axe **A**. Dans l'exemple illustré, les axes de mesure primaires **AP1, AP2** de la première et de la deuxième cellule de mesure **11, 12** sont orientés vectoriellement dans le même sens, et les axes de mesure secondaires **AS1, AS2** de la première et de la deuxième cellule de mesure sont aussi orientés vectoriellement dans le même sens. Autrement dit, les deux cellules de mesure **11, 12,** notamment leurs éléments magnéto-sensibles, sont agencées dans le même sens. Cependant, les axes de mesure primaires **AP1, AP2** de la première et de la deuxième cellule de mesure **11, 12** et/ou les axes de mesure secondaires **AS1, AS2** de la première et de la deuxième cellule de mesure peuvent être orientés vectoriellement selon les deux sens opposés de la même direction. Dans ce cas, il faudra cependant exprimer les valeurs algébriques des composantes primaires et secondaires par rapport à un même sens, sur la même base vectorielle, donc prendre en compte la valeur opposée d'une des deux valeurs algébriques délivrées par la cellule.

Les points de mesure **P1** et **P2** de la première et de la deuxième cellule **11, 12** sont des points distincts, écartés l'un de l'autre autour de l'axe de rotation **A**. La distance minimale entre les deux points de mesure doit être telle que les valeurs représentatives du champ magnétique créé en ces deux points par le corps aimanté diffèrent d'un écart supérieur au pouvoir de résolution des cellules de mesure. Autrement dit, la première et la deuxième cellule de mesure ne doivent pas délivrer, en tant que résultat de leurs mesures respectives en ces deux points, les mêmes valeurs représentatives du vecteur représentatif du champ magnétique.

La première et la deuxième cellule de mesure **11, 12** peuvent être agencées sur la seconde pièce **16** de telle sorte que les axes de mesure primaires de la première et de la deuxième cellule de mesure, ou les axes de mesure secondaires de la première et de la deuxième cellule de mesure, sont orientés selon la direction d'une bissectrice de l'écart angulaire entre les deux points de mesure **P1, P2,** mesuré autour de l'axe de rotation **A** dans un plan perpendiculaire à l'axe de rotation **A**. On pourrait prévoir que la première cellule **11** et la deuxième cellule **12** de mesure soient agencées sur la seconde pièce **16** de telle sorte que les axes de mesure primaires **AP1, AP2** de la première et de la deuxième cellule de mesure **11, 12** sont orientés selon la direction de la bissectrice de l'écart angulaire entre les deux points de mesure, mesuré autour de l'axe de rotation **A** dans un plan perpendiculaire à l'axe de rotation. En variante, on pourrait prévoir que ce soient les axes de mesure secondaires de la première et de la deuxième cellule de mesure qui seraient orientés selon la direction de la bissectrice de l'écart angulaire entre les deux points de mesure. Cependant, encore d'autres orientations sont possibles. A la **Fig. 2,** on a ainsi illustré le cas dans lequel les axes de mesure primaires de la première et de la deuxième cellule de mesure, sont orientés parallèlement à la direction arbitraire du vecteur de base $\overrightarrow{Xo}$. Par conséquent, les axes de mesure secondaires **AS1, AS2** de la première et de la deuxième cellule de mesure sont orientés selon la direction du vecteur de base $\overrightarrow{Yo}$.

Il existe de nombreuses cellules, disponibles commercialement, qui permettent d'obtenir ces mesures.

Un exemple de cellule utilisable dans l'invention peut ainsi mettre en oeuvre un composant « MLX90365 Triaxis Position Sensor IC » qui est commercialisé par la société Melexis NV, Rozendaalstraat 12, B-8900 Ieper, Belgique, et décrite notamment dans la documentation « MLX90365 Triaxis Position Sensor IC Datasheet », numéro de révision 5.8, datée du 01.11.2016. D'autres références du même constructeur peuvent aussi être utilisées, comme les références MLX90333 ou MLX90364.

Ce type de cellule de mesure **11, 12** assure une mesure du champ magnétique en un seul point, en minimisant le nombre de circuits intégrés et en simplifiant la production par diminution du nombre de pièces, sachant que chaque composant introduit des tolérances liées aux incertitudes de montage. La notion de mesure en un seul point s'apprécie en fonction de la résolution spatiale de la mesure de position délivrée par le capteur. Chaque cellule de mesure **11, 12** peut comprendre par exemple une unité magnéto-sensible composée généralement d'au moins deux éléments magnéto-sensibles, très proches l'un de l'autre au point d'être considérés au même point, et dont les sorties sont éventuellement utilisées par une unité de calcul de la cellule de mesure. Très souvent, l'unité magnéto-sensible et l'unité de calcul font partie du même composant électronique, ce qui permet de réduire le coût et d'augmenter la fiabilité du capteur. Il est envisageable de prévoir que les deux cellules de mesure **11, 12** soient intégrées dans un même composant électronique, lequel peut comprendre une unité de calcul commune aux deux cellules. Cependant, dans le cadre de l'invention, il peut être prévu que les deux cellules soient munie d'une unité de communication pour communiquer des informations à une unité de calcul distante, par exemple hébergée dans une unité de contrôle électronique (ECU) ou un ordinateur.

Avec un tel type de cellule, on peut obtenir, en chacun des points de mesure **P1, P2,** au moins deux composantes **Bx, By** du vecteur représentatif du champ magnétique **B** créé par le corps aimanté **10** dans un repère orthogonal. Les deux repères ont des origines différentes, respectivement au point de mesure **P1, P2** considéré, mais des vecteurs de base identiques. Dans l'exemple de la **Fig. 2,** et pour la démonstration ci-dessous, le repère est donc respectivement (**P1,** $\overrightarrow{Xo}$, $\overrightarrow{Yo}$), (**P2,** $\overrightarrow{Xo}$, $\overrightarrow{Yo}$), La première cellule **11** permet notamment d'obtenir une première composante primaire **Bx1,** selon l'axe de mesure primaire **AP1,** du vecteur représentatif du champ magnétique **B** au point **P1,** et une première composante secondaire **By1,** selon l'axe de mesure secondaire **AS1,** du vecteur représentatif du champ magnétique **B** induit par le corps aimanté au point **P1.** La deuxième cellule **12** permet notamment d'obtenir une deuxième composante primaire **Bx2**, selon l'axe de mesure primaire **AP2,** du vecteur représentatif du champ magnétique **B** au point **P2,** et une deuxième composante secondaire **By2**, selon l'axe de mesure secondaire AS2, du vecteur représentatif du champ magnétique **B** induit par le corps aimanté au point **P2.**

Dans le cadre de l'invention, il est prévu de déterminer une valeur représentative de la position angulaire relative entre les deux pièces **14, 16.**

Comme illustré sur la **Fig. 4,** on comprend ainsi qu'une méthode **100** selon l'invention comprend une étape **110** d'équipement de la première pièce **14** avec un corps aimanté **10,** en forme de secteur angulaire cylindrique de révolution autour de l'axe de rotation **A,** et présentant une aimantation diamétrale.

La méthode comprend une étape **120** d'équipement de la seconde pièce **16** avec une première cellule de mesure **11** en un premier point de mesure **P1** et avec une deuxième cellule de mesure **12** en un deuxième point de mesure **P2.**

Dans ces étapes, on veille à ce que le premier point de mesure **P1** de la première cellule de mesure **11** et du deuxième point de mesure **P2** de la deuxième cellule **12** soient agencés à égale distance de l'axe de rotation **A** et dans des positions écartées d'un angle fixe non nul et strictement inférieur à 90 degrés d'angle autour de l'axe de rotation **A,** de préférence inférieur à 30 degrés d'angle, plus préférentiellement inférieur ou égal à 20 degrés d'angle.

Dans la méthode, chaque cellule de mesure délivre **130** au moins deux signaux électriques représentatifs respectivement d'une composante primaire $B_{x1}$, $B_{x2}$ et d'une composante secondaire $By_1$, $By_2$ du vecteur représentatif du champ magnétique créé par le corps aimanté **10** au point de mesure **P1, P2** de la cellule considérée, respectivement selon un axe de mesure primaire **AP1, AP2** et selon un axe de mesure secondaire **AS1, AS2** qui sont orthogonaux entre eux et orthogonaux à l'axe de rotation **A.**

Dans la méthode, la première et la deuxième cellule de mesure **11, 12** sont agencées sur la seconde pièce **16** de telle sorte que les axes de mesure primaires **AP1, AP2** de la première et de la deuxième cellule de mesure sont parallèles entre eux, préférentiellement orientés vectoriellement dans le même sens, et que les axes de mesure secondaires **AS1, AS2** de la première et de la deuxième cellule de mesure sont parallèles entre eux, préférentiellement orientés vectoriellement dans le même sens.

Les étapes ci-dessus de la méthode seront avantageusement mises en oeuvre en tirant parti d'un système capteur **1** tel que décrit ci-dessus.

A l'étape **150,** la méthode détermine une valeur représentative de la position angulaire relative θ entre les deux pièces en déterminant **140** un angle brut dont la tangente est fonction d'un rapport entre d'une part la différence des composantes secondaires et d'autre part la différence des composantes primaires, mesurées par les deux cellules **11, 12** pour une position angulaire relative donnée.

Cette méthode comporte ainsi une ou plusieurs étapes de calcul qui peuvent être mises en oeuvre dans une unité calcul, cette dernière étant intégrée dans le système capteur **1**, ou étant à distance, par exemple dans une unité électronique de contrôle ou un ordinateur. L'unité de calcul comporte typiquement un module ou plusieurs modules de mémoire, au moins un processeur, un module d'entrée/sortie des données, et éventuellement un module de communication. Les étapes de calcul de la méthode sont typiquement mises en oeuvre par un programme informatique contenant les instructions correspondantes et stockées dans le module de mémoire.

Ainsi, il est prévu de calculer une valeur $\Delta B_x$ représentative de la différence entre la première composante primaire $B_{x1}$ et la deuxième composante primaire $B_{x2}$, mesurées respectivement aux points **P1** et **P2**. Typiquement cette valeur de différence peut s'écrire sous la forme d'une fonction, par exemple une fonction linéaire ou affine :

$$\Delta B_x = f_x\,(B_{x1} - B_{x2})$$

Par exemple, on pourrait avoir :

$$\Delta B_x = a_x * (B_{x1} - B_{x2}) + c_x$$

De la manière la plus simple, on peut avoir :

$$\Delta B_x = B_{x1} - B_{x2} \qquad (1)$$

De même, il est prévu de calculer une valeur $\Delta B_y$ représentative de la différence entre la première composante secondaire $B_{y1}$ et la deuxième composante secondaire $B_{y2}$, mesurées respectivement aux points **P1** et P2. Typiquement cette valeur de différence peut s'écrire sous la forme d'une fonction, par exemple une fonction linéaire ou affine :

$$\Delta B_y = f_y\,(B_{y1} - B_{y2})$$

Par exemple, on pourrait avoir :

$$\Delta B_x = a_y * (B_{y1} - B_{y2}) + c_y$$

De la manière la plus simple, on peut avoir :

$$\Delta B_y = B_{y1} - B_{y2} \qquad (2)$$

Dans ce cas, l'invention prévoit de déterminer un angle brut gamma comme étant l'arc dont la tangente est représentative d'un rapport entre d'une part la différence des composantes secondaires et d'autre part la différence des composantes primaires, ce rapport pouvant être le rapport $\Delta B_y / \Delta B_x$ ou le rapport inverse $\Delta B_x / \Delta B_y$. En fonction du rapport choisi, on obtiendra l'angle brut gamma ou son complémentaire (90°- gamma), duquel on reviendra aisément à l'angle brut recherché.

Ainsi, cette valeur d'angle brut gamma peut s'écrire sous la forme d'une fonction :

$$gamma = Arctan\,\{f\,[\Delta B_y\,/\,\Delta B_x]\} \text{ ou } gamma = Arctan\,\{f\,[\Delta B_x\,/\,\Delta B_y]\}$$

Soit, par exemple :

$$gamma = Arctan\,\{f\,[\,f_y\,(B_{y1} - B_{y2})\,/\,f_x\,(B_{x1} - B_{x2})]\}$$

Dans cette équation, la fonction f peut être considérée comme une fonction de filtrage des valeurs mesurées.

De la manière la plus simple, on peut avoir :

$$\text{gamma} = \text{Arctan} \{K_{xy} \times [(B_{y1} - B_{y2}) / (B_{x1} - B_{x2})]\} \qquad (3)$$

où $K_{xy}$ est une valeur égale à 1 pour le calcul théorique de la valeur de l'angle du champ magnétique dans le plan ($\vec{Xo}$, $\vec{Yo}$), mais il est parfois avantageux d'utiliser une autre valeur afin de compenser des biais de mesure.

En effet, on appelle $\theta$ l'angle représentatif la position angulaire relative entre les deux pièces **14, 16,** mesuré dans un plan perpendiculaire à l'axe de rotation **A,** autour de l'axe de rotation A. Dans l'exemple, l'angle $\theta$ représentatif la position angulaire relative entre les deux pièces **14, 16,** est mesuré dans le repère fixe (**0**, $\vec{Xo}$, $\vec{Yo}$) défini dans le plan de mesure ($\vec{Xo}$, $\vec{Yo}$), entre la direction d'aimantation $\vec{M}$ du corps aimanté et la direction de du vecteur de base $\vec{Yo}$, ce dernier ayant, par convention, dans cet exemple, une direction fixe par rapport aux cellules de mesure **11, 12,** donc par rapport à la deuxième pièce **16.**

Dans le repère fixe (**0**, $\vec{Xo}$, $\vec{Yo}$) défini dans le plan de mesure, les deux cellules de mesure **11, 12** se trouvent aux positions angulaires $\propto_1$ et $\propto_2$.

Une vue tridimensionnelle d'un exemple de réalisation du système capteur est illustrée à la **Fig. 1.**

Pour un corps aimanté 10 de type « bague », tel qu'illustré à la **Fig. 2,** les composantes radiale et tangentielle du champ magnétique créé par le corps magnétique sont données par les relations suivantes.

La composante radiale Br1 du champ magnétique créé par le corps aimanté **10** au premier point de mesure **P1** de la première cellule **11,** en projection sur un rayon issu de l'axe de rotation **A** et passant par le premier point de mesure **P1,** est donnée par :

$$B_{r1} = B_R \cos(\theta - \alpha_1) \qquad (6)$$

où $B_R$ est l'amplitude maximale de la composante radiale de l'induction magnétique à la distance **R** séparant les points de mesure **P1** de l'axe de rotation **A.**

La composante tangentielle Bt1 du champ magnétique créé par le corps aimanté **10** au premier point de mesure **P1** de la première cellule **11,** en projection sur une tangente à la rotation passant par le premier point de mesure **P1** de la première cellule **11,** est donnée par:

$$B_{t1} = -B_T \sin(\theta - \alpha_1) \qquad (7)$$

où $B_T$ est l'amplitude maximale de la composante tangentielle de l'induction magnétique à la distance **R** séparant le point de mesure **P1** de l'axe de rotation **A.**

$B_R$ et $B_T$ sont des caractéristiques intrinsèques du corps aimanté **10,** qui dépendent notamment de ses dimensions, du matériau utilisé, et de son aimantation. Si on mesure, en un point fixe situé à la même distance **R** de l'axe de rotation **A** le champ radial et le champ tangentiel pendant que le corps aimanté **10** tourne, on obtient, en fonction de la position angulaire relative du corps aimanté, des courbes sinusoïdales avec des amplitudes maximales, ici appelées $B_R$ et $B_T$.

De manière similaire, la composante radiale Br2 du champ magnétique créé par le corps aimanté **10** au deuxième point de mesure **P2** de la deuxième cellule **12,** en projection sur un rayon issu de l'axe de rotation **A** et passant par le deuxième point de mesure **P2,** est donnée par :

$$B_{r2} = B_R \cos(\theta - \alpha_2) \qquad (8)$$

La composante tangentielle Bt2 du champ magnétique créé par le corps aimanté **10** au deuxième point de mesure **P2** de la deuxième cellule **12,** en projection sur une tangente à la rotation passant par le deuxième point de mesure **P2** de la deuxième cellule **12,** est donnée par:

$$B_{t2} = -B_T \sin(\theta - \alpha_2) \qquad (9)$$

Il est alors possible d'écrire les composantes Bx1, By1, en projection sur le repère (**P1**, $\vec{Xo}$, $\vec{Yo}$) lié à la première cellule **11,** du vecteur représentatif du champ magnétique créé au premier point de mesure P1:

$$B_{x1} = -B_{r1}\sin(\alpha_1) - B_{t1}\cos(\alpha_1) \qquad (10)$$

$$B_{y1} = B_{r1}\cos(\alpha_1) - B_{t1}\sin(\alpha_1) \qquad (11)$$

De la même façon, il est possible d'écrire les composantes Bx2, By2, en projection sur le repère $(\mathbf{P2}, \overrightarrow{\mathbf{Xo}}, \overrightarrow{\mathbf{Yo}})$ lié à la deuxième cellule **12,** du vecteur représentatif du champ magnétique B créé au premier point de mesure P2:

$$B_{x2} = -B_{r2}\sin(\alpha_2) - B_{t2}\cos(\alpha_2) \qquad (12)$$

$$B_{y2} = B_{r2}\cos(\alpha_2) - B_{t2}\sin(\alpha_2) \qquad (13)$$

Par combinaison des équations (6) et (7) avec les équations (10) et (11), ainsi que par combinaison des équations (8) et (9) avec les équations (12) et (13), et en exprimant les différences données par (1) et (2), on obtient : Pour $\Delta B_x$ :

$$\Delta B_x = (B_R + B_T)(\cos(\alpha_2)\sin(\alpha_2) - \cos(\alpha_1)\sin(\alpha_1))\cos(\theta)$$
$$+ (B_R + B_T)(\cos^2(\alpha_1) - \cos^2(\alpha_2))\sin(\theta) \qquad (14)$$

Pour $\Delta B_y$ :

$$\Delta B_y = (B_R + B_T)(\cos^2(\alpha_1) - \cos^2(\alpha_2))\cos(\theta)$$
$$+ (B_R + B_T)(\cos(\alpha_1)\sin(\alpha_1) - \cos(\alpha_2)\sin(\alpha_2))\sin(\theta) \qquad (15)$$

On peut écrire (14) et (15) sous la forme suivante :

$$\Delta B_x = A\cos(\theta) + B\sin(\theta) \qquad (16)$$

$$\Delta B_y = B\cos(\theta) - A\sin(\theta) \qquad (17)$$

avec

$$A = (B_R + B_T)(\cos(\alpha_2)\sin(\alpha_2) - \cos(\alpha_1)\sin(\alpha_1)) \qquad (18)$$

$$B = (B_R + B_T)(\cos^2(\alpha_1) - \cos^2(\alpha_2)) \qquad (19)$$

Si maintenant on définit l'angle $\delta$ tel que :

$$\cos(\delta) = \frac{A}{\sqrt{A^2 + B^2}} \qquad (20)$$

$$\sin(\delta) = \frac{B}{\sqrt{A^2 + B^2}} \qquad (21)$$

on a :

$$\Delta B_x = \sqrt{A^2 + B^2}\cos(\delta - \theta) \qquad (22)$$

$$\Delta B_y = \sqrt{A^2 + B^2}\sin(\delta - \theta) \qquad (23)$$

Finalement, on trouve l'angle calculé par (3) :

$$gamma = \delta - \theta \qquad (24)$$

Avec

$$\delta = atan(\frac{B}{A}).$$

Donc, la position angulaire relative $\theta$ est trouvée, par la mesure (3), avec le signe inversé et à une constante près, ce qui est facilement pris en compte par la calibration du capteur.

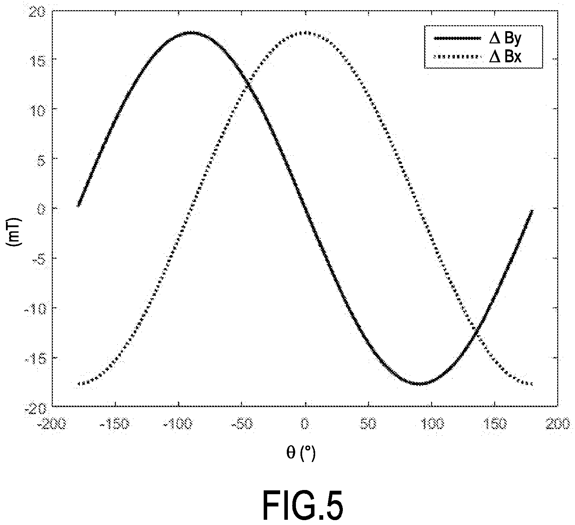

On ainsi illustré à la **Fig. 5** des graphes des variations, obtenues par simulation numérique, des deux valeurs $\Delta B_x = B_{x2} - B_{x1}$ et $\Delta B_y = B_{y2} - B_{y1}$ pour une variation de la position angulaire relative $\theta$ de 360 degrés d'angle.

Pour cette simulation numérique, les paramètres suivants ont été retenus pour une géométrie de corps aimanté de type « bague », tel qu'illustré à la Fig. 2 :

- Diamètre extérieur de l'aimant : 18 mm
- Epaisseur radiale de l'aimant : 3 mm
- Induction rémanente de l'aimant : 0,7 T
- Entrefer « e » : 4 mm
- Hauteur de l'aimant selon axe ZO : 6 mm
- Distance entre les points de mesure P1 et P2 : 2,4 mm

On note que, dans la méthode proposée, les deux valeurs $\Delta B_x$ et $\Delta B_y$ qui sont prises en compte ont la même amplitude, ce qui augmente la précision du capteur.

Par ailleurs, la valeur de la position angulaire relative $\theta$ qui est déterminée par la méthode ne dépend pas des amplitudes $B_R$ et $B_T$, ce qui rend le système capteur **1** robuste par rapport aux tolérances géométriques.

En plus, on peut observer que la méthode laisse la possibilité de choisir l'écart angulaire entre les deux points de mesure, ce qui permet d'optimiser le capteur. Par exemple, en disposant les cellules de mesure de telle sorte que les deux points de mesure soient suffisamment proches en distance, il est possible de réduire le coût du capteur en utilisant un seul composant électronique qui comporte les deux cellules de mesure, et éventuellement l'unité de calcul. De plus, plus les deux cellules de mesure sont proches, plus le calcul différentiel mis en oeuvre dans la méthode proposée permettra de limiter l'influence d'une éventuelle perturbation magnétique sur la précision de la détermination de la position angulaire relative des deux pièces **14, 16**. Une telle perturbation magnétique peut résulter notamment de la présence de pièces ferromagnétiques à proximité du système capteur **1**.

## Revendications

1. - Méthode de détermination d'une position angulaire relative d'une première pièce (**14**) par rapport à une seconde pièce (**16**) autour d'un axe de rotation (**A**), la méthode comprenant :

   - l'équipement de la première pièce avec un corps aimanté (**10**), en forme de secteur angulaire cylindrique de révolution autour de l'axe de rotation (**A**), ayant une surface enveloppe avant (**3**) qui est une surface cylindrique de révolution externe, et présentant une aimantation diamétrale ;
   - l'équipement de la seconde pièce avec une première cellule de mesure (**11**) en un premier point de mesure (**P1**) et avec une deuxième cellule de mesure (**12**) en un deuxième point de mesure (P2), chaque cellule de mesure délivrant aux moins deux signaux électriques représentatifs respectivement d'une composante primaire ($B_{x1}$, $B_{x2}$) et d'une composante secondaire ($B_{y1}$, $B_{y2}$) du champ magnétique créé par le corps aimanté (**10**) au point de mesure (**P1, P2**) de la cellule (**10, 11**) considérée, respectivement selon un axe de mesure primaire

(**x**) et un axe de mesure secondaire (**y**) qui sont orthogonaux entre eux et orthogonaux à l'axe de rotation (**A**) ;
- l'agencement du premier point de mesure (**P1**) de la première cellule de mesure et du deuxième point de mesure (**P2**) de la deuxième cellule à égale distance (**R**) de l'axe de rotation (**A**) et dans des positions écartées d'un angle fixe ($\alpha_2 - \alpha_1$) non nul et strictement inférieur à 90 degrés d'angle autour de l'axe de rotation (**A**) ;

**caractérisée en ce que** :

- la première et la deuxième cellule de mesure (**11, 12**) sont agencées sur la seconde pièce de telle sorte que les axes de mesure primaires (**x**) de la première et de la deuxième cellule de mesure sont parallèles entre eux, et que les axes de mesure secondaires (**y**) de la première et de la deuxième cellule de mesure sont parallèles entre eux ;
- lors d'un déplacement relatif entre les cellules de mesure (**11, 12**) d'une part et le corps aimanté (**10**) d'autre part, les cellules de mesure (**11, 12**) se déplacent relativement en regard de la surface enveloppe avant (**3**) du corps aimanté (**10**) ;
- la méthode détermine une valeur représentative ($\theta$) de la position angulaire relative entre les deux pièces en déterminant un angle brut ($\gamma$) dont la tangente est fonction d'un rapport entre d'une part la différence des composantes secondaires ($\Delta B_y$) et d'autre part la différence des composantes primaires ($\Delta B_x$), mesurées par les deux cellules (**11, 12**) pour une position angulaire relative ($\theta$) donnée
- les points de mesure (P1, P2) de la première et de la deuxième cellule (**11, 12**) sont agencés dans un même plan perpendiculaire à l'axe de rotation (**A**), ce plan étant en coïncidence avec le corps aimanté (**10**) selon la direction axiale de l'axe de rotation (**A**).

2. - Méthode selon la revendication 1, **caractérisée** en ce la première et la deuxième cellule de mesure sont agencées sur la seconde pièce de telle sorte que les axes de mesure primaires de la première et de la deuxième cellule de mesure, ou les axes de mesure secondaires de la première et de la deuxième cellule de mesure, sont orientés selon la direction d'une bissectrice de l'écart angulaire ($\alpha_2 - \alpha_1$) entre les deux points de mesure, mesuré autour de l'axe de rotation (**A**) dans un plan perpendiculaire à l'axe de rotation (**A**).

3. - Méthode selon l'une des revendications **1** ou **2, caractérisée en ce que** la méthode calcule la position angulaire relative ($\theta$) en retranchant, à l'angle brut calculé ($\gamma$), un écart angulaire fixe.

4. - Méthode selon l'une des revendications précédentes, **caractérisée en ce que** le corps aimanté présente la forme d'un tronçon d'un secteur tubulaire cylindrique de révolution autour de l'axe de rotation.

5. - Méthode selon l'une des revendications **1** à **3, caractérisée en ce que** le corps aimanté (**10**) présente la forme d'un tronçon d'un secteur angulaire de disque cylindrique de révolution autour de l'axe de rotation.

6. - Méthode selon l'une des revendications précédentes, **caractérisée en ce que** le corps aimanté (**10**) présente la forme d'un secteur angulaire à 360° autour de l'axe de rotation.

7. - Méthode selon l'une des revendications précédentes, **caractérisée en ce que** la première et la deuxième cellule de mesure (**11, 12**) sont agencées sur la seconde pièce dans des positions écartées d'un angle fixe non nul ($\alpha_2 - \alpha_1$) inférieur à 30 degrés d'angle, de préférence inférieur ou égal à 20 degrés d'angle autour de l'axe de rotation (**A**).

8. - Méthode selon l'une des revendications précédentes, **caractérisée en ce que**, en tout point magnétisé du corps aimanté (**10**), le vecteur d'aimantation ($\vec{M}$) présente toujours la même direction absolue.

9. - Méthode selon l'une des revendications précédentes, **caractérisée en ce que** le corps aimanté (**10**) est agencé sur un arbre (**14**), à distance des extrémités longitudinales de l'arbre, avec donc des tronçons de l'arbre (**14**) de chaque côté du corps aimanté (**10**).

**Patentansprüche**

1. Verfahren zur Bestimmung einer relativen Winkelposition eines ersten Teils (14) in Bezug auf einen zweiten Teil (16) um eine Drehachse (A), wobei das Verfahren umfasst:

- die Ausstattung des ersten Teils mit einem magnetischen Körper (10) in Form eines drehzylindrischen Winkelsektors um die Drehachse (A), der eine vordere Hülloberfläche (3) aufweist, die eine äußere Drehzylinder-Oberfläche ist, und eine diametrale Magnetisierung aufweist,
- die Ausstattung des zweiten Teils mit einer ersten Messzelle (11) an einem ersten Messpunkt (P1) und mit einer zweiten Messzelle (12) an einem zweiten Messpunkt (P2), wobei jede Messzelle mindestens zwei elektrische Signale liefert, die jeweils eine primäre Komponente ($B_{x1}$, $B_{x2}$) und eine sekundäre Komponente ($B_{y1}$, $B_{y2}$) des durch den magnetischen Körper (10) erzeugten Magnetfelds an dem Messpunkt (P1, P2) der in Betracht gezogenen Zelle (10, 11) repräsentieren, jeweils gemäß einer primären Messachse (x) und einer sekundären Messachse (y), die orthogonal zueinander und orthogonal zu der Drehachse (A) sind,
- die Anordnung des ersten Messpunkts (P1) der ersten Messzelle und des zweiten Messpunkts (P2) der zweiten Zelle in gleichem Abstand (R) zu der Drehachse (A) und in in einem fixen Winkel ($\alpha_2 - \alpha_1$) ungleich null und strikt kleiner als 90 Winkelgrad um die Drehachse (A) beabstandeten Positionen,

**dadurch gekennzeichnet, dass**:

- die erste und die zweite Messzelle (11, 12) an dem zweiten Teil auf solche Weise angeordnet werden, dass die primären Messachsen (x) der ersten und der zweiten Messzelle zueinander parallel sind, und dass die sekundären Messachsen (y) der ersten und der zweiten Messzelle zueinander parallel sind,
- während einer relativen Verschiebung zwischen den Messzellen (11, 12) einerseits und dem magnetischen Körper (10) andererseits die Messzellen (11, 12) sich der vorderen Hülloberfläche (3) des magnetischen Körpers (10) zugewandt relativ verschieben,
- das Verfahren einen repräsentativen Wert ($\theta$) der relativen Winkelposition zwischen den zwei Teilen bestimmt, indem es einen Bruttowinkel ($\gamma$) bestimmt, dessen Tangente eine Funktion eines Verhältnisses zwischen der Differenz der sekundären Komponenten ($\Delta B_y$) einerseits und der Differenz der primären Komponenten ($\Delta B_X$) andererseits ist, gemessen durch die zwei Zellen (11, 12) für eine gegebene relative Winkelposition ($\theta$),
- die Messpunkte (P1, P2) der ersten und der zweiten Zelle (11, 12) in einer selben Ebene senkrecht zu der Drehachse (A) angeordnet werden, wobei diese Ebene mit dem magnetischen Körper (10) entlang der axialen Richtung der Drehachse (A) zusammenfällt.

2. Verfahren nach Anspruch 1, **dadurch gekennzeichnet, dass** die erste und die zweite Messzelle auf dem zweiten Teil auf solche Weise angeordnet werden, dass die primären Messachsen der ersten und der zweiten Messzelle, oder die sekundären Messachsen der ersten und der zweiten Messzelle, entlang der Richtung einer Winkelhalbierenden des Winkelabstands ($\alpha_2 - \alpha_1$) zwischen den zwei Messpunkten, gemessen um die Drehachse (A) in einer Ebene senkrecht zu der Drehachse (A), orientiert sind.

3. Verfahren nach einem der Ansprüche 1 oder 2, **dadurch gekennzeichnet, dass** das Verfahren die relative Winkelposition ($\theta$) durch Abziehen eines fixen Winkelabstands von dem berechneten Bruttowinkel ($\gamma$) berechnet.

4. Verfahren nach einem der vorhergehenden Ansprüche, **dadurch gekennzeichnet, dass** der magnetische Körper die Form eines Teilstücks eines drehzylindrischen Rohrsektors um die Drehachse aufweist.

5. Verfahren nach einem der Ansprüche 1 bis 3, **dadurch gekennzeichnet, dass** der magnetische Körper (10) die Form eines Teilstücks eines drehzylindrischen Scheiben-Winkelsektors um die Drehachse aufweist.

6. Verfahren nach einem der vorhergehenden Ansprüche, **dadurch gekennzeichnet, dass** der magnetische Körper (10) die Form eines Winkelsektors von 360° um die Drehachse aufweist.

7. Verfahren nach einem der vorhergehenden Ansprüche, **dadurch gekennzeichnet, dass** die erste und die zweite Messzelle (11, 12) auf dem zweiten Teil in in einem fixen Winkel ($\alpha_2 - \alpha_1$) ungleich null und kleiner als 30 Winkelgrad, vorzugsweise kleiner als oder gleich 20 Winkelgrad, um die Drehachse (A) beabstandeten Positionen angeordnet werden.

8. Verfahren nach einem der vorhergehenden Ansprüche, **dadurch gekennzeichnet, dass** an jedem magnetisierten Punkt des magnetischen Körpers (10) der Magnetisierungsvektor ($\vec{M}$) stets dieselbe absolute Richtung aufweist.

9. Verfahren nach einem der vorhergehenden Ansprüche, **dadurch gekennzeichnet, dass** der magnetische Körper (10) auf einer Welle (14) von den Längsenden der Welle beabstandet, und daher mit Teilstücken der Welle (14) auf jeder Seite des magnetischen Körpers (10), angeordnet ist.

**Claims**

1. - A method for determining a relative angular position of a first part (**14**) with respect to a second part (**16**) about an axis of rotation (**A**), the method comprising:

   - equipping the first part with a magnetized body (**10**), in the shape of an angular cylindrical sector of revolution about the axis of rotation (**A**), having a front envelope surface (**3**) which is an outer cylindrical surface of revolution, and with diametrical magnetization;
   - equipping the second part with a first measurement cell (**11**) at a first measurement point (**P1**) and with a second measurement cell (12) at a second measurement point (**P2**), each measurement cell delivering at least two electrical signals respectively representative of a primary component ($B_{x1}$, $B_{x2}$) and a secondary component ($B_{y1}$, $B_{y2}$) of the magnetic field created by the magnetized body (**10**) at the measurement point (**P1, P2**) of the considered cell (**10, 11**), respectively along a primary measurement axis (**x**) and a secondary measurement axis (**y**) which are orthogonal together and orthogonal to the axis of rotation (**A**) ;
   - arranging the first measurement point (**P1**) of the first measurement cell and the second measurement point (**P2**) of the second measurement cell at equal distance (**R**) from the axis of rotation (A) and in positions spaced by a non-zero fixed angle ($\alpha_2$ - $\alpha_1$) strictly less than 90 degree angle about the axis of rotation (**A**) ;

   **characterized in that**:

   - the first and second measurement cells (**11, 12**) are arranged on the second part such that the primary measurement axes (**x**) of the first and second measurement cells are parallel to each other, and that the secondary measurement axes (**y**) of the first and second measurement cells are parallel to each other;
   - during a relative displacement between the measurement cells (**11**, **12**) on the one hand and the magnetized body (**10**) on the other hand, the measurement cells (**11, 12**) move relatively facing the front envelope surface (**3**) of the magnetized body (**10**) ;
   - the method determines a value representative (θ) of the relative angular position between the two parts by determining a raw angle (γ) whose tangent is a function of a ratio between on the one hand the difference of the secondary components ($\Delta B_y$) and on the other hand the difference of the primary components ($\Delta B_x$), measured by the two cells (**11, 12**) for a given relative angular position (θ).
   - the measuring points (**P1, P2**) of the first and second cell (**11, 12**) are arranged in the same plane perpendicular to the axis of rotation (**A**), this plane being coincident with the magnet body body (**10**) in the axial direction of the axis of rotation (A).

2. - The method according to claim **1, characterized in that** the first and second measurement cells are arranged on the second part such that the primary measurement axes of the first and second measurement cells or the secondary measurement axes of the first and second measurement cells are oriented along the direction of a bisector of the angular deviation ($\alpha_2$ - $\alpha_1$) between the two measurement points, measured about the axis of rotation (**A**) in a plane perpendicular to the axis of rotation (**A**).

3. - The method according to any of claims **1** or **2, characterized in that** the method calculates the relative angular position (θ) by subtracting, from the calculated raw angle (γ), a fixed angular deviation.

4. - The method according to any of the preceding claims, **characterized in that** the magnetized body has the shape of a section of a cylindrical tubular sector of revolution about the axis of rotation.

5. - The method according to any of claims **1** to **3, characterized in that** the magnetized body (**10**) has the shape of a section of an angular sector of a cylindrical disc of revolution about the axis of rotation.

6. - The method according to any of the preceding claims, **characterized in that** the magnetized body (**10**) has the shape of a 360° angular sector about the axis of rotation.

7. - The method according to any of the preceding claims, **characterized in that** the first and second measurement cells (**11, 12**) are arranged on the second part in positions spaced by a non-zero fixed angle ($\alpha_2$ - $\alpha_1$) less than 30 degree angle, preferably less than or equal to 20 degree angle about the axis of rotation (**A**).

8. - The method according to any of the preceding claims, **characterized in that**, at any magnetized point of the magnetized body (**10**), the magnetization vector ($\vec{M}$) has always the same absolute direction.

9. - The method according to any of the preceding claims, **characterized in that** the magnetized body (**10**) is arranged on a shaft (**14**), at a distance from the longitudinal ends of the shaft, therefore with sections of the shaft (**14**) on each side of the magnetized body (**10**).

FIG.1

FIG.2

FIG.3

FIG.4

FIG.5

**EP 3 807 598 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8587294 B
- US 20150142376 A